# EUROPÄISCHE PATENTSCHRIFT

(11) **EP 0 912 299 B1**
(45) Veröffentlichungstag und Bekanntmachung des Hinweises auf die Patenterteilung: **05.12.2001**
(21) Anmeldenummer: 97913004.4
(22) Anmeldetag: 09.05.1997
(51) Int. Cl.: B25H 1/08, B25H 1/10, B25H 1/14, B25B 5/00, B25B 5/10, B25B 5/14

(54) **WERKTISCH FÜR MONTAGEARBEITEN AN WERKSTÜCKEN**
WORK BENCH FOR ASSEMBLY OF WORKPIECES
TABLE D'OUVRAGE POUR TRAVAUX D'ASSEMBLAGE DE PIECES

(30) Priorität: 13.05.1996 DE 19619066; 13.05.1996 DE 29608556 U
(43) Veröffentlichungstag der Anmeldung: 06.05.1999
(73) Patentinhaber: Förster, Rainer, 09238 Auerswalde (DE)
(72) Erfinder: Förster, Rainer, 09238 Auerswalde (DE)
(74) Vertreter: Krause, Wolfgang, Dr.-Ing., Dipl.-Ing.
(86) Internationale Anmeldenummer: DE9700968
(87) Internationale Veröffentlichungsnummer: WO9743094

(56) Entgegenhaltungen:
- EP-A- 0 325 738
- WO-A-95/17282
- DE-U- 9 200 535
- DE-U- 29 603 128
- FR-A- 2 316 052
- FR-A- 2 574 694
- GB-A- 770 770
- GB-A- 2 286 144
- US-A- 4 245 827
- US-A- 5 181 702

## Beschreibung

Die Erfindung betrifft einen Werktisch nach dem Oberbegriff des Patentanspruchs 1.

Ein Werktisch der genannten Art ist durch das DE-U- 90 15 218 bekannt geworden.

Die Tischplatte besteht dort aus starkem Stahlblech mit uber die Fläche gleichmäßig verteilt angeordneten Bohrungen für die Aufnahme der Tragelemente der Halte- oder Spannmittel.

Zur Sicherung einer ausreichenden Lagegenauigkeit und für das Vermeiden von Verformungen in den Bohrungen sind in die Bohrungen Führungshülsen eingepaßt.

Die Haltemittel sind auf senkrechten Stangen, die in die Führungshülsen eingreifen, gehalten. Sie haben seitlich auskragende Spannarme, an deren äußeren Enden die üblichen Spannköpfe mit ihren Spindeln angeordnet sind.

Die Lage der Spindeln in den Spannköpfen kann je nach gewählter Funktion unterschiedlich ausgerichtet sein. Die Spannköpfe sind stets mit dem Spannarm fest verbunden.

Nachteilig ist bei dieser Ausführung, daß die Führungen für die Tragelemente in der Platte durch die seitlich auskragenden Spannarme einer sehr großen Kippkraft ausgesetzt sind, die entweder die Platte oder die Bohrungen in der Platte nach kurzem Gebrauch plastisch verformen. Die Lebensdauer der Werktische ist begrenzt.

Durch die geforderte hohe Stabilität der Tischplatte hat man diese aus zunehmend stärkeren Stahlblechen gefertigt.

Dieses Stahlblech muß großflächig spanend bearbeitet und mit den entsprechenden Bohrungen versehen werden. Diese Art der Herstellung des Werktisches ist sehr arbeits- und materialaufwendig. Es bereitet erhebliche Probleme diese Tischplatte zu manipulieren.

Die Verwendung von Stahlblechen für die Tischplatte machte es notwendig, diese, insbesondere bei Schweißarbeiten, mit einem Schutzmittel zu versehen, damit sich die Schweißperlen auf der Oberfläche nicht einbrennen können.

Diese Schutzschicht muß beim bestimmungsgemäßen Gebrauch des Werktisches in relativ kurzen Abständen erneuert werden. Der Aufwand hierfür ist hoch.

Zur Vermeidung sehr hoher Kippkräfte der Träger in den Bohrungen hat man die Länge der seitlich auskragenden Spannarme auf ein Minimum reduziert. Durch diese Maßnahme reduzierte man jedoch das Haftvermögen der Träger in den Bohrungen.

Zum Ausgleich dieses Stabilitatsverlustes hat man, am unteren Ende der in die Bohrungen eingeführten Bolzen der Träger, radial nach außen verstellbare Rückhaltemittel angeordnet, die man durch eine zentrale Gewindespindel, die von oben gedreht werden kann, spreizen konnte (DE-U- 91 14 220).

Durch diese Maßnahme wurde die vertikale Verstellbarkeit der Träger selbst und damit der Spannmittel in erheblichem Maße beschränkt.

Derart gestaltete Träger sind kompliziert und kostenaufwendig. Der Montageprozeß des Werkstückes auf der Tischplatte ist sehr zeit- und arbeitsaufwendig.

Bedingt durch die labile Verbindung zwischen den Trägern der Spannmittel und der Tischplatte in den Bohrungen neigen sich die Träger beim Spannvorgang mittels Spindel am Spannkopf weit nach hinten.

Zum Ausgleich der auftretenden Lagedifferenzen zwischen dem Spannpunkt und dem sich seitlich abbiegenden Träger hat man den Spannarm teleskopartig gestaltet, so daß sich die Lage des Spannpunktes beim Spannvorgang selbst nicht verändert (DE-U-91 14 219).

Eine derartige Kombination aus Werktisch und Spannmitteln ist in ihrer Gesamtheit sehr kostenaufwendig und die Arbeit mit derartigen Werktischen ist konpliziert und arbeitsaufwendig. Die WO-A-9517282 beschreibt eine Werkbank insbesondere fur Schweiss- und Stahlbauarbeiten. Die Werkbank stellt ein Rahmengestell dar, das aus wenigstens vier Beinen und wenigstens je zwei Quertraversen und Längsflanschen besteht. Die Langsflansche sind Profilstahlträger, die auf den Quertraversen aufliegen, befestigt sind oder in Querrichtung verschiebbar parallel geführt sind. Diese weisen wenigstens eine nach oben offene T-Nut auf. Hauptaugenmerk gilt wenigstens einer Fuhrungsstange, die starr mit dem Rahmengestell oder einem Längsflansch verbunden und parallel zu einem Längsflansch angeordner ist. Die Führungsstange dient als Träger wenigstens eines Supportes, der mit einer nach oben offenen C-Profilstange sowie waagerechten und senkrechten Aufspannflächen versehen ist. Eine Befestigung der Befestigungs- und Spannelemente zur Halterung von Werkzeugen, Anschlägen oder dergleichen Hilfsgeräten erfolgt über in den T-Nuten der Längsflansche, des Supportes und Montagearmen eingesetzten Kopfschrauben und Kontermuttern.

Die Arbeit mit einer derartigen Werkbank ist sehr kompliziert und arbeitsaufwendig.

Die Aufgabe der Erfindung besteht darin, einen Werktisch mit Spannmitteln der eingangs genannten Art zu schaffen, der eine rationelle Arbeitsweise bei der Montage der Elemente des Werkstuckes auf dem Werktisch zuläßt, wobei es möglich ist auch großflächige und sperrige Werkstücke auf der Tischplatte einfach und schnell zu fixieren.

Diese Aufgabe wird mit den im Patentanspruch 1 aufgeführten Merkmalen gelöst.

Der Werktisch für Montagearbeiten ermoglicht einen nahezu universellen Einsatz, wobei eine hohe Stabilitat der Werkstücke erreicht wird.

Der Werktisch ist besonders für Verbindungsarbeiten mittels Schweiß-, Löt- oder Klebeverfahren geeignet.

Die Tischplatte wird durch die Anzahl und die Größe der Profilschienen und die Länge der Längsträger bestimmt, so daß diese an die zu montierenden Werkstücke anpassbar ist. Ein Werkstück kann somit auch innerhalb der Fläche der Tischplatte positioniert werden.

Der Abstand zwischen den Profilschienen sichert, daß sich keine Verunreinigungen in Form von z.B. Schweißperlen oder Material-abfällen in den Nuten ansammeln. Die Beweglichkeit der Nutsteine wird nicht behindert.

Die Befestigung der Träger für die Spannmittel erfolgt durch eine einfache Konstruktion.

Die Spannmittel sind derart ausgestaltet, daß im Zusammenhang mit der aus den Profilschienen gebildeten Tischplatte eine einfache und schnelle Fixierung der Werkstücke möglich ist. Ein besonderer Vorteil besteht darin, daß es sich dabei auch um großflächige, sperrige Werkstücke handeln kann, die keine oder nur ungenügend planparallele Teile zum Fixieren an der Tischplatte aufweisen.

Die Befestigung der Träger für die Spannmittel erfolgt durch eine einfache Konstruktion, die extrem hohe Flächenpressungen vermeidet.

Die Profilschienen können auf einfachen, kleinen Maschinen in wenigen Arbeitsgängen so bearbeitet werden, daß sie den Anforderungen an einen solchen Werktisch im wesentlichen gerecht werden.

Vorteilhafte Ausgestaltungen der Erfindung sind in den Patentansprüchen 2 bis 19 angegeben.

Die parallel zueinander angeordneten Längsträger sind über Quertraversen in einem Abstand fest miteinander verbunden. Diese sind nach der Weiterbildung des Patentanspruchs 2 sowohl fest als auch drehbar mit Tischbeinen versehen. Damit ist zum einen ein Werktisch mit parallel und fest zum Fußboden angeordneter Tischplatte und zum anderen mit einem Winkel zum Fußboden einstellbaren Tischplatte gegeben. Diese Tatsache unterstützt die universellen Anwendungsmoglichkeiten des Werktisches. An großen Werkstücken sind so kleinere Teile positionier- und leicht montierbar.

Das Anbringen von Rollen oder Rädern an die Tischbeine entsprechend der Weiterbildung des Patentanspruchs 3 führt dazu, daß dieser verfahrbar ist. Dieser Tatbestand unterstützt die universelle Anwendbarkeit des Werktisches, der somit leicht zum Montageort transportiert werden kann.

Die Weiterbildung nach Patentanspruch 4 sichert eine leichte und schnelle Befestigung der Träger mit den Profilschienen gleichbedeutend auf der Tischplatte. Bei der Realisierung einer kreuzförmigen Nut benachbarter Profilschienen fällt der Nutstein im losen Zustand nicht zum Fußboden. Er verbleibt in der Nut und ist somit leicht zu einer neuen Postion verschiebbar.

Die losbare Befestigung der Profilschienen nach der Weiterbildung des Patentanspruchs 5 vermeidet ein Verziehen der Profilschienen und sichert einen widerstandsarmen Stromfluß beim Elektroschweißen.

Das Kupferblech auf den Profilschienen nach der Weiterbildung des Patentanspruchs 6 verbessert die Ableitung der Wärme vom Werkstuck bei Schweißarbeiten. Dadurch sind Konstruktionen mit Blechstärken vor allem kleiner 1 mm nahezu frei von Verwerfungen verschweißbar. Dementsprechend sind langere Schweißnähte ohne Unterbrechung realisierbar. Gleichzeitig sind auftretende Schweißperlen leicht zu entfernen.

Mit den Weiterbildungen der Patentansprüche 7 und 8 sind flachenmäßig große Konstruktionen auf dem Werktisch plazierbar. Gleichzeitig sind diese Verstellwinkel zur Positionierung des Werkstückes nutzbar.

Die in der Weiterbildung des Patentanspruchs 9 beschriebene Form des Werktisches gestattet es, größere Rahmenkonstruktionen mit geringem Aufwand exakt ausgerichtet zu befestigen. Gleichzeitig sind Werkstucke größerer Abmessungen bearbeitbar. Die Masse des Werktisches kann deutlich reduziert werden. Die Kosten für den Werktisch können für spezifische Anwendungsgebiete deutlich reduziert werden.

Die Gestaltung der Profilschienen nach der Weiterbildung des Patentanspruchs 10 vermeidet in besonderer Weise das Haften von Schweißperlen auf der Oberfläche der Tischplatte, ohne daß die Oberflache wiederholt mit einer Schutzschicht versehen werden muß.

Die in der Weiterbildung des Patentanspruchs 11 beschriebene Befestigung der Tragrohre auf der Tischplatte sichert eine einfach handhabbare und herstellbare Fixierung für die Träger, die auch eine ausreichend große Kraft in Richtung der Längsachse der Träger ausüben können.

Die in der Weiterbildung des Patentanspruchs 12 aufgeführten Spannmittel eignen sich in besonderer Weise für die Verwendung an Werktischen nach dem Patentanspruch 1.

Der Spannarm kann in seiner Länge verstellt werden, während die Spindel mit ihrem Spannkopf jeweils in die Richtung ausgerichtet werden kann, die eine optimale Fixierung des jeweiligen Teiles des Werkstückes ermöglicht.

In der Weiterbildung des Patentanspruchs 13 ist eine sehr einfache Ausführungsform des Spannmittels aufgeführt. Dabei wird der Zapfen des Spannkopfes in eine der Bohrungen oder im Langloch des Spannarmes eingesetzt, in die richtige Lage geschwenkt und mittels Schraubverbindung fixiert. Die Zahl der notwendigen Teile wird auf ein Minimum reduziert.

Die Weiterbildung des Patentanspruchs 14 gestattet eine kontinuierliche Verstellung des Spannkopfes längs des Spannarmes bei gleichzeitiger stufenloser Einstellung der Spannrichtung der Spindel.

Die Weiterbildungen der Patentansprüche 15 und 16 beinhalten vorteilhafte Varianten der Gestaltung des Stellschlittens. Dabei kommt es darauf an, die am Stellschlitten auftretenden exzentrischen Spannkräfte bestmöglichst abzufangen und auftretende Kippmomente weitestgehend einzuschränken.

Die in der Weiterbildung des Patentanspruchs 17 beschriebene Ausführung des Spannarmes ermöglicht es, über Wände von Werkstücken hinweg oder innerhalb eines Werkstückes zu montierende Teile sicher zu plazieren.

Mit den Stabilisierungsmitteln nach der Weiterbildung des Patentanspruchs 18 kann man im Bedarfsfall die Spannkräfte auf mehrere Profilschienen gleichmäßig verteilen und gleichzeitig Anschläge oder dergleichen positionieren.

Die Anordnung nach der Weiterbildung des Patentanspruchs 19 ermöglicht es, die Spannelemente der Träger gleichzeitig als Befestigungselemente zu nutzen. Das hat den zusätzlichen Vorteil, daß die gegeneinander wirkenden Kräfte kaum Kippmomente verursachen.

Ausführungsbeispiele der Erfindung sind in den Zeichnungen dargestellt und werden im folgenden näher beschrieben.

Es zeigen:
- Figur 1: eine Ansicht des Tisches mit zwei unterschiedlichen Formen von Trag- und Spannmitteln,
- Figur 2: eine perspektivische Ansicht einer Spannkombination,
- Figur 3: eine vereinfachte, perspektivische Gesamtansicht einer Werktischvariante mit einzelnen Paaren von Prcfilschienen,
- Figur 4: eine erste Variante der Realisierung des Schwenklagers für das Spannmittel in einer Schlittenform,
- Figur 5: eine Seitenansicht zu Figur 4,
- Figur 6: eine zweite Variante der Realisierung des Schwenklagers für das Spannmittel in einer weiteren Schlittenform,
- Figur 7: eine Seitenansicht zu Figur 6,
- Figur 8: eine dritte Variante der Realisierung des Schwenklagers für das Spannmittel,
- Figur 9: eine Seitenansicht zu Figur 8 und
- Figur 10: eine vereinfachte, perspektivische Gesamtansicht einer Werktischvariante mit einzelnen Paaren von Profilschienen, wobei ein Paar verschiebbar ist.

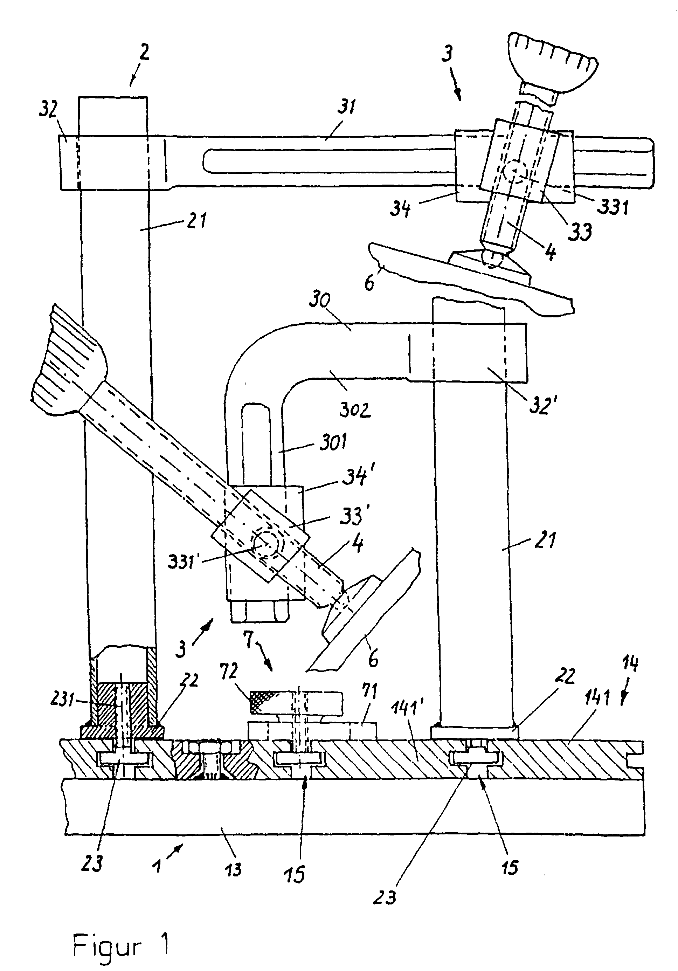

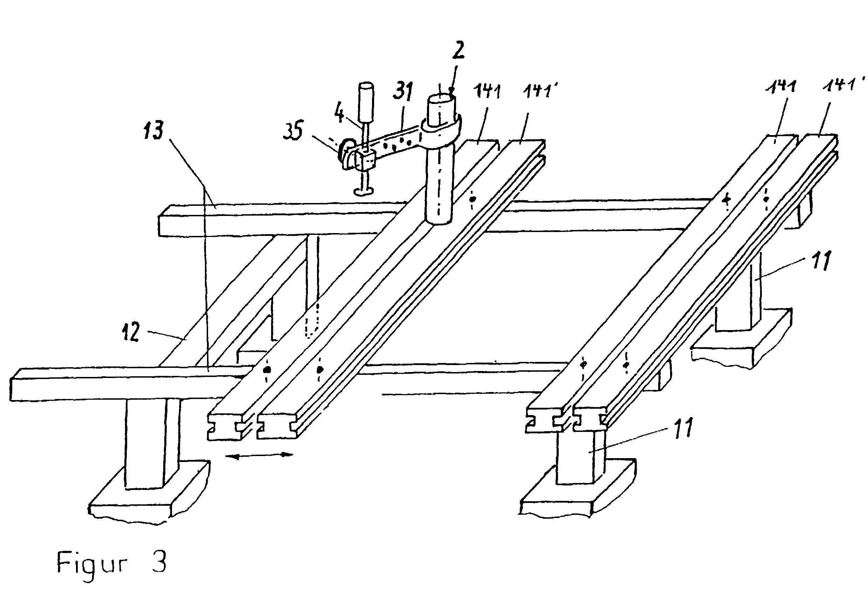

Der erfindungsgemäße Werktisch 1 für Montagearbeiten an Werkstücken 6 besitzt in einem ersten Ausführungsbeispiel entsprechend der Darstellungen in den Figuren 1 bis 3 vier Tischbeine 11, die paarweise durch Quertraversen 12 miteinander verbunden sind. Längsträger 13 verbinden die Quertraversen 12 und bilden mit ihrer oberen Begrenzungsfläche die Auflagen für die Profilschienen 141 und 141', die die Tischplatte 14 bilden.

Die Frofilschienen 141 und 141' sind im gleichbleibenden seitlichen Abstand mit den Längsträgern 13 mittels Schraubverbindung verbunden. Dazu besitzen die Längsträger 13 entweder Bohrungen, mit oder ohne Gewinde, oder Gewindebolzen als Teile von Befestigungseinrichtungen.

Die Profilschienen 141 und 141' besitzen im wesentlichen einen rechteckigen Querschnitt. In beiden längsverlaufenden Seitenflächen sind in Längsrichtung Nuten eingearbeitet.

Einander benachbarte Profilschienen 141, 141' begrenzen jeweils eine so gebildete kreuzförmige Nut 15 zur Befestigung von Tragern 2 für Spannmittel auf der Tischplatte 14.

Die Profilschienen 141 und 141' werden vorzugsweise im Stranggußverfahren aus Eisen-Kohlenstoff-Legierungen mit einem Kohlenstoffanteil, der größer ist als 2%, hergestellt.

Diese haben den Vorteil, daß auf ihnen bei Schweißarbeiten Schweißperlen weder haften noch sich einbrennen können.

In Abhängigkeit von der Gestalt des auf der Tischplatte 14 zu montierenden Werkstückes 6 werden an frei wählbaren Positionen in den kreuzförmigen Nuten 15 die Trager 2 befestigt. Die Träger 2 haben zu diesem Zweck quaderförmige Nutsteine 23, die in Richtung der Oberfläche der Tischplatte 14 gerichtete Gewindebolzen 231 aufweisen. Die Gewindebolzen 231 überragen dabei die Oberfläche der Tischplatte 14. Auf diesen Gewindebolzen 231 ist ein Endstück 22 eines Tragrohres 21 aufgeschraubt.

Das Endstück 22 ist vorzugsweise mittels Paß- und/oder Schweißverbindung mit dem Tragrohr 21 verbunden.

Der Nutstein 23 wird von der Seite her in eine gewählte kreuzförmige Nut 15 eingeführt, wobei diese Gestaltung der Nut ein Fallen des Nutsteines 23 zum Fußboden verhindert. Durch ein Verdrehen des Tragrohres 21, mit Hand oder mit einem zweckmäßigen Werkzeug, wird in der vorgewählten Position der Träger 2 unter Klemmwirkung fixiert. Die Länge des Tragrohres 21 richtet sich nach den zu montierenden Werkstücken 6. Für eine universelle Anwendung des Werktisches 1 sind Tragrohre 21 in verschiedenen Längen zuordenbar.

In Abhängigkeit von der Form des Werkstückes 6 und der notwendigen Spannrichtung können auf dem Tragrohr 21 ein oder mehrere Spannmittel 3 oder Stützarme 5 von oben aufgeschoben werden.

Die Stützarme 5 haben die gleiche Ausführung wie die Spannmittel 3. Sie stützen sich aber auf der Tischplatte 14 ab. Ihre Bestandteile entsprechen denen der Spannmittel 3.

Ein Spannmittel 3 besteht zum ersten aus einem hinsichtlich seiner wirksamen Kraglänge verstellbaren Spannarm 31, 31a und zum zweiten aus einem um eine quer zur Langsachse des Spannarmes 31, 31a gerichteten Achse durch ein Schwenklager 341, 341'' schwenkbaren Spannkopf 33, 33', 33'', 33a mit einer Spindel 4, einer Gewindeführung für die Spindel 4 und einem Zapfen 331, 331' 331'', 331a, der quer zur Achse der Spindel 4 gerichtet ist. Die Länge des Spannarmes 31, 31a richtet sich nach den zu bearbeitenden Werkstücken 6. Für eine universelle Anwendbarkeit sind verschiedene Längen vorgebbar und anbietbar.

Der Spannarm 31, 31a besitzt weiterhin ein Spannlager 32, dessen Bohrung etwas größer ist als der Durchmesser des Tragrohres 21. Durch die Masse des Spannarmes 31, 31a oder durch die aufgebrachte Spannkraft des seitlich auskragenden Spannarmes 31, 31a wird das Spannlager 32 selbsthemmend auf dem Tragrohr 21 gehalten.

Während der Montage wird der Spannarm 31, 31a vorübergehend durch einen an sich bekannte Stellringe gehalten. Im Normalfall ist der Spannarm 31, 31a quer zur Achse des Spannlagers 32 gerichtet.

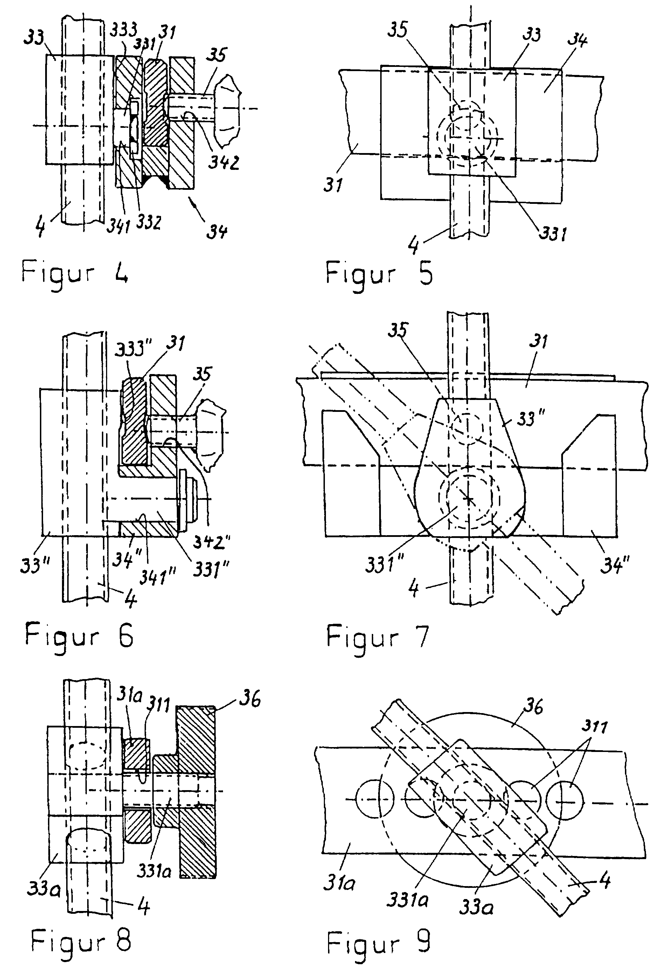

In einer ersten Ausführungsform des Spannkopfes 33, 33', 33'' ist am Spannarm 31 ein aus Richtung der Oberfläche der Tischplatte 14 oder von der Seite des zu spannenden Werkstückes 6 aufsetzbarer U-förmiger Stellschlitten 34, 34', 34'' entsprechend den Darstellungen der Figuren 4 bis 7 längs verschiebbar angeordnet. Auf der Seite des Zapfens 331, 331', 331" besitzt der Spannkopf 33, 33', 33'' eine ebene Stützfläche 333, 333'', die an einer Außenfläche des Stellschlittens 34, 34', 34'' anliegt und die exzentrischen Kraftkomponenten der Spannkraft aufnimmt.

In einer ersten Variante des U-förmigen Stellschlittens 34 dieser ersten Ausführungsform entsprechend der Darstellungen in den Figuren 4 und 5 ist in einem Schenkel eine Gewindebohrung 342 für eine Spannschraube 35 vorgesehen. Mit dieser Spannschraube 35 wird der Steilschlitten 34 in der gewünschten Position fixiert. Im anderen Schenkel befindet sich eine Bohrung 341, in der der Zapfen 331 des Spannkopfes 33 mit angemessenem Spiel geführt ist. Durch einen Bund 332 wird der Spannkopf 33 auch axial gesichert. Diese Gestaltungsform hat den Vorteil, daß die Verstellung des Stellschlittens 34 und damit des Spannkopfes 33 am Spannarm 31 stufenlos erfolgen kann.

In einer zweiten Variante des U-formigen Stellschlittens 34" dieser Ausfuhrungsform entsprechend der Darstellungen in den Figuren 6 und 7 ist wiederum in einem Schenkel des Stellschlittens 34'' eine Gewindebohrung 342" für eine Spannschraube 35 vorgesehen. Das Schwenklager 341" und 331" befindet sich im Ruckenabschnitt des U-förmigen Profiles des Stellschlittens 34". Die Stützfläche 333" des Spannkopfes 33" liegt direkt am Spannarm 31 an. Der zweite Schenkel des U-förmigen Profiles ist für die Bewegung des Spannkopfes 33" ausgespart und besitzt nur Fuhrungsflächen für den Spannarm 31 außerhalb des Bereiches des Spannkopfes 33''. Mit der Spannschraube 35 wird der Stellschlitten 34" in der vorgewählten Position fixiert. Diese Variante hat den Vorteil, daß die Spindel 4 näher an die Längsachse des Spannarmes 31 herangelegt werden kann. Das Kippmoment wird dadurch geringer.

In einer zweiten Ausführungsform des Spannkopfes 33a entsprechend den Darstellungen in den Figuren 8 und 9 besitzt der Zapfen 331a ein Gewinde. Der Spannarm 31a dieser Variante hat entlang seiner Längsachse quer zur Spannrichtung mehrere, einander nahe benachbart angeordnete Bohrungen 311, in die der Zapfen 331a wahlweise eingeführt werden kann oder weist ein Langloch auf, in dem sich der Zapfen 331a befindet. Mittels einer Spannmutter 36 wird der Spannkopf 33a in der gewählten Bohrung 311 kraftschlüssig gehalten. Die Bohrungen 311 im Spannarm 31a können auch in der Höhe gegeneinander versetzt sein, so daß die möglichen Spannpositionen exakt auf die Spannbedingungen eingestellt werden können. Bei Verwendung eines Langloches können sich auch Vertiefungen mit einem Abstand zueinander im Spannarm befinden, die einen Teil der Spannmutter aufnehmen und diese damit auf einer festen Position fixieren.

In den Fällen, wo ein Teil gehalten werden soll, das sich im Abstand unterhalb einer Gehäusewand oder dergleichen befindet, wird ein abgewinkelter Spannarm 30 entsprechend der Darstellung in der Figur 1 verwendet.

Dieser hat einen horizontalen Abschnitt und einen Abschnitt 301, der senkrecht oder schräg in Richtung der Oberfläche der Tischplatte 14 oder von dieser weg gerichtet ist.

Der Stellschlitten 34' ist dort am abgewinkelten Abschnitt 301 einstell- und feststellbar.

Ist es aus irgendwelchen Gründen notwendig, sehr hohe Spannkräfte auszuüben, die zu einer Verformung einzelner Profilschienen 141, 141' führen, können zusätzliche Stabilisierungsanordnungen 7 eingesetzt werden. Diese verbinden die hoch belasteten Profilschienen 141, 141' mit benachbarten Profilschienen und verteilen dadurch die wirkenden Kräfte.

Die Stabilisierunganordnung 7 besteht aus einem Nutstein 23, einer Spannplatte 71 und einer Spannmutter 72 entsprechend der Darstellung in der Figur 1.

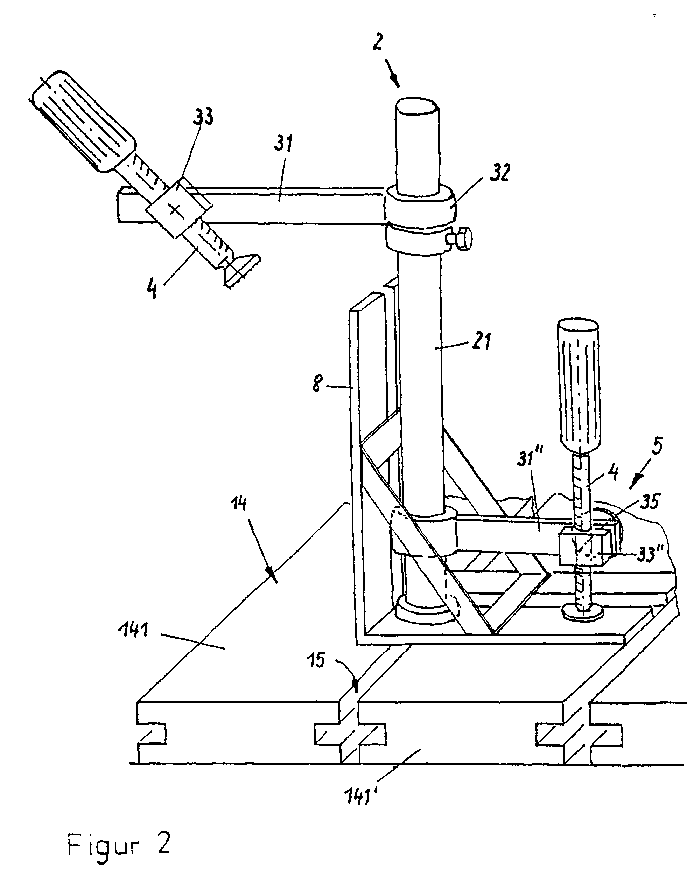

Der Befestigung von üblichen Stützwinkeln 8 entsprechend der Darstellung in der Figur 2 dienen gleichzeitig die Träger 2.

Das hat den Vorteil, daß beim Spannen Kippmomente am Werkstück 6 weitgehend vermieden werden. Dadurch kann die Zahl der Spannpunkte am Werkstück 6 reduziert werden.

Werden an einem Träger 2 Spannmittel 3 an einem langen Spannarm 31 befestigt, ist es zweckmäßig, mit einem Stützarm 5 ein entsprechendes Gegenmoment zu erzeugen. Der Stützarm 5 ist in Figur 2 dargestellt. Er hat einen Spannarm 31'', einen Spannkopf 33" und eine Spindel 4. Der Spannkopf 33'' wird über einen Gewindezapfen, der eine Bohrung des Spannarmes 31'' durchgreift, in einer vorgeschriebenen Winkellage am Spannarm 31" befestigt.

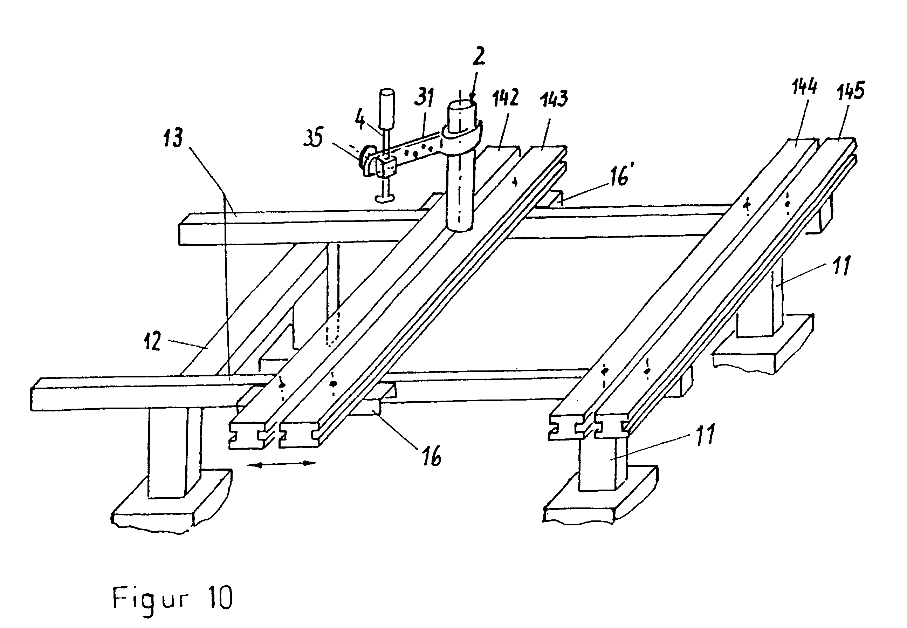

Ein zweites Ausführungsbeispiel des erfindungsgemäßen Werktisches 1 ist prinzipiell in der Figur 10 dargestellt.

Dieser Werktisch 1 besitzt keine vollständige Tischplatte 14 sondern lediglich einzelne in Paaren angeordnete Profilschienen 142, 143 und 144, 145. Die Profilschienen 142, 143; 144, 145 eines Paares bilden jeweils eine, bereits oben beschriebene kreuzförmige Nut 15 für die Befestigung der Träger 2.

Eines dieser Paare von Profilschienen 144, 145 ist fest auf den Längsträgern 13 des Werktisches 1 entsprechend dem ersten Ausführungsbeispiels befestigt. Das zweite Paar 142, 143 befindet sich auf separaten Führungselementen 16, 16', die die Längsträger 13 formschlüssig zwischen sich einschließen.

Dieses Paar von Profilschienen 142, 143 ist somit parallel zu den Längsträgern 13 und auf den Längsträgern 13 verschiebbar.

Ist es notwendig, die Position dieses Paares 142, 143 gegenüber den Längstragern 13 zu sichern, können Trag- und Spannmittel 2, 3 aus Richtung des Fußbodens in eine kreuzförmige Nut 15 eingeführt werden und das Paar von Profilschienen 142, 143 wird durch eine Verspannung gegen die Längsträger 13 in der gewünschten Position fixiert.

Die Gestaltung der Spannmittel 3, eines Stützarmes 5 und einer Stabilisierungsanordnung 7 entspricht denen des ersten Ausführungsbeispiels.

In einem weiteren Ausführungsbeispiel sind die jeweils parallel zueinander angeordneten Quertraversen 12 und Längsträger 13 einschließlich der darauf befestigten Profilschienen 141, 141', 142, 143, 144, 145 gegenüber den Tischbeinen 11 verdrehbar angeordnet. Dabei beträgt der Drehwinkel -90° bis +90° gegenüber der horizontalen Fußbodenoberfläche. Die Anordnung und die Gestaltung der Profilschienen 141, 141', 142, 143, 144, 145 erfolgt entsprechend dem ersten und zweiten Ausführungsbeispiels. Die Gestaltung der Spannmittel 3, eines Stützarmes 5 und einer Stabilisierungsanordnung 7 entspricht wiederum denen des ersten Ausführungsbeispiels.

Der Werktisch 1 nach den vorgenannten Ausführungsbeispielen ist auch mit Rollen oder Rädern ausrüstbar, so daß dieser fahrbar ausgestaltet ist.

## Patentansprüche

1. Werktisch für Montagearbeiten an Werkstücken mit
- einem Gestell mit mindestens zwei parallel zueinander angeordneten Längsträgern (13) und mindestens zwei Tischbeinen (11),
- einer Tischplatte (14), die über ihre Oberflache verteilt Ausnehmungen zur Aufnahme von Trägern von Spannmitteln (3) besitzt,
- Trägern (2) für die Spannmittel (3), die in den Ausnehmungen der Tischplatte lösbar befestigt werden,
- Spannmitteln (3), die seitlich auskragend an den Trägern (2) gehalten sind, wobei jedes Spannmittel (3) aus einem Spannarm (31, 31a) und aus einem quer zur Längsachse des Trägers (2) schwenkbaren Spannkopf (33, 33', 33") besteht und
- mindestens einem Spannmittel (3) an jedem Träger (2), wobei die Auskragweite der Spannmittel (3) veranderbar ist und die Spannmittel (3) an dem jeweiligen Träger (2) höhenverstellbar, drehbar und arretierbar angeordnet sind,
**dadurch gekennzeichnet, daß**
- die Tischplatte (14) aus im Abstand voneinander angeordneten Profilschienen (141, 141', 142, 143, 144, 145) besteht, deren paarweise gegeneinander gerichteten Seitenflächen parallel verlaufende Nuten (15) besitzen,
- jeder Träger (2) aus einem Nutstein (23) und einem Tragrohr (21) besteht, die mittels Gewindebolzen (231) gegeneinander verspannbar sind und
- die Längsträger (13) kraftschlüssige und in einem bestimmten Abstand angeordnete Teile von Befestigungseinrichtungen besitzen.

2. Werktisch nach Patentanspruch 1, **dadurch gekennzeichnet, daß** die parallel zueinander angeordneten Längsträger (13) einschließlich der Profilschienen (141, 141', 142, 143, 144, 145) mit den Tischbeinen (11) fest oder über ein Lager und Zapfen verdrehbar verbunden sind.

3. Werktisch nach Patentanspruch 1, **dadurch gekennzeichnet, daß** sich an den Enden der Tischbeine (11) zum Fußboden hin Rollen oder Räder befinden, so daß ein Abstand zwischen den Enden der Tischbeine (11) und dem Fußboden gegeben ist.

4. Werktisch nach Patentanspruch 1, **dadurch gekennzeichnet, daß** die paarweise gegeneinander gerichteten Seitenflächen benachbarter Profilschienen (141, 141', 142, 143, 144, 145) eine kreuz- oder eine T- förmige Nut (15) begrenzen.

5. Werktisch nach den Patentansprüchen 1 und 4, **dadurch gekennzeichnet, daß** die Profilschienen (141, 141') mittels Schraubverbindungen auf den Längsträgern (13) befestigt sind.

6. Werktisch nach Patentanspruch 1, **dadurch gekennzeichnet, daß** sich ein U-förmiges Kupferblech auf der die Tischplatte (14) bildenden Oberfläche der Profilschiene (141, 141', 142, 143, 144, 145) so befindet, daß diese vollständig durch das Kupferblech bedeckt ist.

7. Werktisch nach Patentanspruch 1, **dadurch gekennzeichnet, daß** an mindestens einem Ende mindestens einer Profilschiene (141, 141', 142, 143, 144, 145) ein feststellbarer Verstellwinkel mit mindestens einem Tiefspannschenkel so angeordnet ist, daß sich die Drehachse rechtwinklig zur Symmetrieachse der Profilschiene (141, 141', 142, 143, 144, 145) befindet.

8. Werktisch nach Patentanspruch 7, **dadurch gekennzeichnet, daß** die Höhen der Oberfläche der Tischplatte (14) und der Kante des Tiefspannschenkels bei einem Winkel von 180° zwischen beiden gleich ist.

9. Werktisch nach Patentanspruch 1, **dadurch gekennzeichnet, daß** die Tischplatte 14 aus mindestens vier in Paaren angeordneten Profilschienen (142, 143, 144, 145) besteht, daß mindestens eines der Paare auf Führungselementen (16) befestigt und entlang der Längsträger (13) verschiebbar ist.

10. Werktisch nach Patentanspruch 1, **dadurch gekennzeichnet, daß** die Profilschienen (141, 141', 142, 143, 144, 145) der Tischplatte (14) aus eisernen Stranggußprofiler mit einem Kohlenstoffanteil von mindestens 2 % bestehen.

11. Werktisch nach Patentanspruch 1, **dadurch gekennzeichnet, daß** ein Endabschnitt des Tragrohres (21) mit einem Endstück (22), das eine konzentrische Gewindebohrung besitzt, fest verbunden ist und daß der Nutstein (23) einen Gewindebolzen (231) besitzt.

12. Werktisch nach Patentanspruch 1, **dadurch gekennzeichnet, daß** das Spannmittel (3) aus einem um eine quer zur Längsachse des Spannarmes (31, 31a) gerichteten Achse durch ein Schwenklager (341, 341'') schwenkbaren Spannkopf (33, 33', 33'', 33a) mit einer Spindel (4) und einer Gewindeführung besteht.

13. Werktisch nach Patentanspruch 12, **dadurch gekennzeichnet, daß** der Spannarm (30a) längs seiner Achse mit quer dazu angeordneten Bohrungen (311) oder mindestens einem Langloch versehen ist, die gemeinsam mit einem Zapfen (331a) am Spannkopf (33a) und einem kraftschlüssigen Feststellelement das Schwenklager bilden.

14. Werktisch nach Patentanspruch 12, **dadurch gekennzeichnet, daß** dem Spannkopf (33, 33', 33") ein Stellschlitten (34, 34', 34'') zugeordnet ist, der gemeinsam mit einem Zapfen (331, 331', 331'') am Spannkopf (33, 33', 33'') das Schwenklager bildet und daß der Stellschlitten (34, 34', 34'') am Spannarm (31) längs dessen Achse verschiebbar und feststellbar gelagert ist.

15. Werktisch nach den Patentansprüchen 12 und 14, **dadurch gekennzeichnet, daß** der Stellschlitten (34, 34', 34") ein U-förmiges Querschnittsprofil aufweist, daß dieser von der dem Werkstück (6) zugewandten Seite auf den Spannarm (31) aufsetzbar und längs dessen Achse einstellbar ist, daß der erste Schenkel dieses Stellschlittens (34, 34', 34'') eine Klemmschraube (35) und daß der zweite Schenkel das Schwenklager (341) für den Spannkopf (33, 33', 33") besitzt.

16. Werktisch nach einen der Patentansprüchen 12 bis 15, **dadurch gekennzeichnet, daß** der Spannkopf (33, 33', 33") eine parallel zum Tragrohr (21) entweder mit einem Abstand zum Schwenklager (331, 341; 331'', 341'') oder das Schwenklager (331, 341; 331'', 341'') beinhaltende Stützfläche (333, 333") aufweist.

17. Werktisch nach Patentanspruch 12, dadurch gekennnzeichnet, daß der Spannarm 30 im Winkel zueinander geneigte Abschnitte 301, 302 besitzt und daß der Spannkopf (33') an dem zum Werkstück (6) geneigten Abschnitt (301) einstell- und feststellbar gehalten ist.

18. Werktisch nach Patentanspruch 1, **dadurch gekennzeichnet, daß** den Profilschienen (141, 141', 142, 143, 144, 145) wahlweise positionierbare Stabilsierungsanordnungen (7) zugeordnet sind, die aus je einem Nutstein (23) mit Gewindebolzen (231), einer Spannplatte (71) und einem Spannelement (72) bestehen.

19. Werktisch nach Patentanspruch 1, **dadurch gekennzeichnet, daß** zwischen dem Endstück (22) des Tragrohres (21) und der Tischplatte (14) Hilfsmittel (71, 8) für die lagegenaue Positionierung des Werkstückes (6) fixierbar sind.

## Claims

1. A work bench for assembly of workpieces comprising
- an understructure with at least two parallel longitudinal supports (13) and at least two table legs (11),
- a bench top (14) with recesses across its surface for holding brackets of clamping devices (3),
- brackets (2) for the clamping devices (3) that are detachably mounted in the recesses of said bench top,
- clamping devices (3) projecting sidewards and held by brackets (2), each clamping device (3) consisting of a clamping arm (31, 31a) and a grip head (33, 33', 33'') that can be pivoted transversely to the longitudinal axis of the bracket(2), and
- at least one clamping device (3) on each bracket (2), the projection length of said clamping devices (3) being variable and said clamping devices (3) being mounted to said bracket (2) so that they can be height-adjusted, rotated, and fixed,
**characterized in that**
- the bench top (14) consists of profiled rails (141, 141', 142, 143, 144, 145) mounted at a distance whose opposing lateral surfaces comprise parallel grooves (15),
- each bracket (2) consists of a T-nut (23) and a support pipe (21) that can be tightened to each other using a threaded bolt (231), and **in that**
- the longitudinal supports (13) are equipped with frictionlocked parts of fixing devices mounted at a specific distance.

2. The work bench according to claim 1, **characterized in that** the parallel longitudinal supports (13) including the profile rails (141, 141', 142, 143, 144, 145) are fixedly connected or connected via pivot and bearing to the table legs (11).

3. The work bench according to claim 1, **characterized in that** rollers or wheels are provided at the floor ends of the table legs (11) so that there is a clearance between the ends of the table legs (11) and the floor.

4. The work bench according to claim 1, **characterized in that** opposing pairs of lateral surfaces of adjacent profile rails (141, 141', 142, 143, 144, 145) delimit a cross- or T-shaped groove (15).

5. The work bench according to claims 1 and 4, **characterized in that** the profile rails (141, 141') are mounted to the longitudinal supports (13) using screwed connections.

6. The work bench according to claim 1, **characterized in that** a U-shaped copper plate is located on the surface of the profile rail (141, 141', 142, 143, 144, 145) that forms the surface of the bench top (14) in such a way that this surface is fully covered by said copper plate.

7. The work bench according to claim 1, **characterized in that** a fixable adjusting angle with at least one clamping limb is located on at least one end of at least one profile rail (141, 141', 142, 143, 144, 145) in such a way that its rotating axis is at a right angle to the axis of symmetry of the profile rail (141, 141', 142, 143, 144, 145).

8. The work bench according to claim 7, **characterized in that** the bench top (14) and the edge of the clamping limb are at t'he same height at an angle of 180°.

9. The work bench according to claim 1, **characterized in that** the bench top 14 consists of a minimum of four profile rails(142, 143, 144, 145) arranged in pairs, and that at least one of these pairs is fixed to guide elements (16) and can be moved along the longitudinal supports (13).

10. The work bench according to claim 1, **characterized in that** the profile rails (141, 141', 142, 143, 144, 145) of the bench top (14) are made of continuously cast iron profiles with a carbon content of at least 2%.

11. The work bench according to claim 1, **characterized in that** one end section of the support pipe (21) is firmly connected with an end piece (22) that comprises a concentric threaded hole, and that the T-nut (23) comprises a threaded bolt (231).

12. The work bench according to claim 1, **characterized in that** the clamping device (3) consists of a grip head (33, 33', 33'', 33a) that can be pivoted with a drag bearing (341, 341'') around an axis that runs transversely to the longitudinal axis of the clamping arm (31, 31a), said grip head comprising a spindle (4) and a threaded guide.

13. The work bench according to claim 12, **characterized in that** the clamping arm (30a) comprises transversal holes (311) along its axis or at least one oblong recess which together with a pin (331a) on the grip head (33a) and a friction-locking fixing element form the drag bearing.

14. The work bench according to claim 12, **characterized in that** an adjusting slide (34, 34', 34'') is assigned to the grip head (33, 33', 33") which together with a pin (331, 331', 331") on the grip head (33, 33', 33'') forms the drag bearing, and that said adjusting slide (34, 34', 34") on the clamping arm (31) can be moved along the axis of the clamping arm and fixed to it.

15. The work bench according to claims 12 and 14, **characterized in that** the adjusting slide (34, 34', 34") has a U-shaped cross section, can be slid onto the clamping arm (31) from the side facing the workpiece (6) and adjusted along its axis, that the first limb of said adjusting slide (34, 34', 34'') has a clamping screw (35) and that the second limb holds the drag bearing (341) for the grip head (33, 33', 33").

16. The work bench according to any one of claims 12 through 15, **characterized in that** the grip head (33, 33', 33'') comprises a supporting surface (333, 333") that is positioned in parallel to the support pipe (21), either at a distance to the drag bearing (331, 341; 331", 341") or including the drag bearing (331, 341; 331", 341").

17. The work bench according to claim 12, **characterized in that** the clamping arm 30 comprises sections 301, 302 that are tilted at an angle towards each other, and that the grip head (33') is held at section (301) tilted towards the workpiece (6) where it can be adjusted and fixed.

18. The work bench according to claim 1, **characterized in that** stabilizing arrangements (7) that can be positioned as required and each consist of a T-nut (23) with threaded bolt (231), a plate chuck (71) and a clamping unit (72), are assigned to the profile rails (141, 141', 142, 143, 144, 145).

19. The work bench according to claim 1, **characterized in that** accessories (71, 8) can be fixed between the end piece (22) of the support pipe (21) and the bench top (14) for accurate positioning of the workpiece (6).

## Revendications

1. Table d'ouvrage pour travaux de montage sur pièces à usiner avec
- un cadre pourvu d'au moins de deux longerons (13) disposés en parallèle et de deux pieds de table(11),
- un dessus de table (14) qui dispose de creux répartis sur sa surface afin de recueillir les supports des éléments de serrage(3),
- des supports (2) pour les éléments de serrage (3) qui seront fixés de manière détachable dans les creux du dessus de table,
- des éléments de serrage (3) attachés en saillie latérale sur les supports (2), chaque élément de serrage (3) étant composé d'un bras de serrage (31, 31a) et d'un support porte- outil (33, 33', 33'') pivotant en direction transversale par rapport à l'axe longitudinal du support (2), ainsi qu'avec
- au moins un élément de serrage (3) pour chaque support (2), la saillie des éléments de serrage (3) étant modifiable et les éléments de serrage(3) de chaque support(2) pouvant être tournés, arrêtés et ajustés en hauteur.
La revendication est donc **caractérisée par le fait**
- **que** le dessus de table (14) est composé des profilés (141, 141', 142, 143, 144, 145) disposés en écart dont les surfaces latérales disposées par pairs et opposées l'une à l'autre sont pourvues de rainures (15) disposées en parallèle,
- **que** chaque support (2) consiste en un coulisseau (23) et en un tube- support(21) qui peuvent être haubanés l'un contre l'autre à l'aide de boulons filetés(231) et
- **que** les longerons (13) sont munis d'éléments commandés par l'influence de la gravité qui sont disposés dans un écart déterminé et qui font partie de dispositifs de fixation.

2. Table d'ouvrage selon la revendication 1, **caractérisée par le fait que** les longerons disposés en parallèle(13) sont, y compris les profilés (141, 141', 142, 143, 144, 145) sont reliés aux pieds de table (11) soit de manière stationnaire, soit par un roulement ou un tourillon, ce qui permet de les pivoter.

3. Table d'ouvrage selon la revendication 1, **caractérisée par le fait que** les extrémités des pieds de table(11) sont pourvues de rouleaux ou de roues disposées en direction du sol, de sorte qu'il en résulte un écart entre les extrémités des pieds de table (11) et le sol.

4. Table d'ouvrage selon la revendication 1, **caractérisée par le fait que** les surfaces latérales disposées par pairs et opposées l'une à l'autre des profilés voisins (141, 141', 142, 143, 144, 145) se voient limitées par une rainure en T (15) ou cruciforme.

5. Table d'ouvrage selon les revendications 1 et 4,
**caractérisée par le fait que** les profilés (141, 141') sont fixés à l'aide de raccords à vis sur les longerons (13).

6. Table d'ouvrage selon la revendication 1, **caractérisée par le fait qu'**une tôle de cuivre en U est montée sur le profilé (141, 141', 142, 143, 144, 145) dont la surface constitue le dessus de table (14), la tôle de cuivre couvrant complètement la surface du profilé.

7. Table d'ouvrage selon la revendication 1, **caractérisée par le fait qu'**il est disposé un angle d'ajustement à arrêter avec au moins une jambe de serrage sur l'extrême d'au moins d'un des profilés (141, 141', 142, 143, 144, 145), de sorte que l'axe de rotation se trouve à angles droits par rapport à l'axe symétrique du profilé (141, 141', 142, 143, 144, 145).

8. Table d'ouvrage selon la revendication 7, **caractérisée par le fait que**, lors d'un angle de 180°, la hauteur de la surface du dessus de table (14) et du bord de la jambe de serrage est identiques.

9. Table d'ouvrage selon la revendication 1, **caractérisée par le fait que** le dessus de table 14 est composé au moins de quatre profilés (142, 143, 144, 145) disposés par pairs et qu'au moins une de ces pairs est fixée sur des éléments de guidage (16) qui peut être déplacée le long des longerons (13).

10. Table d'ouvrage selon la revendication 1, **caractérisée par le fait que** les profilés (141, 141', 142, 143, 144, 145) du dessus de table (14) sont en profilée de coulée continue avec un pourcentage en carbone d'au moins de 2 %.

11. Table d'ouvrage selon la revendication 1, **caractérisée par le fait qu'**une extrémité du tube- support (21) est reliée de manière stationnaire à un bout (22) doté d'un alésage fileté concentrique, et que le coulisseau (23) est muni d'un boulon fileté (231).

12. Table d'ouvrage selon la revendication 1, **caractérisée par le fait que** l'élément de serrage (3) est composé d'un support porte- outil pivotant (33, 33', 33'', 33a) avec une broche (4) et un guidage fileté, le support porte- outil étant disposé en direction transversale par rapport à l'axe longitudinal du bras de serrage (31, 31a) et sur un roulement pivotant (341, 341'').

13. Table d'ouvrage selon la revendication 12, **caractérisée par le fait que** le bras de serrage (30a) est pourvu, le long de son axe, d'alésages (311) disposés en travers ou bien d'au moins d'un trou oblong qui, en liaison avec un tourillon (331a) du support porte- outil (33a) et un élément de fixation commandé par l'influence de la gravité, constituent le roulement pivotant.

14. Table d'ouvrage selon la revendication 12, **caractérisée par le fait qu'**un chariot ajustable (34, 34', 34'') est attribué au support porte- outil (33, 33', 33'') qui, en liaison avec un tourillon (331, 331', 331'') situé sur le support porte- outil (33, 33', 33"), constitue le roulement pivotant, et que le chariot ajustable (34, 34', 34'') du bras de serrage (31) peut être déplacé et arrêté le long de l'axe de celui-ci.

15. Table d'ouvrage selon les revendications 12 et 14, **caractérisée par le fait que** le chariot ajustable (34, 34', 34'') dispose d'un profil transversal, que ce chariot peut être, à partir du côté de la pièce à usiner (6), monté sur le bras de serrage (31) et ajusté le long de l'axe de celui-ci, que la première fusée d'essieu du chariot ajustable (34, 34', 34'') est dotée d'une vis de serrage (35) et que la deuxième fusée d'essieu abrite le roulement pivotant (341) pour le support porte- outil (33, 33', 33'').

16. Table d'ouvrage selon les revendications 12 à 15, **caractérisée par le fait que** le support porte-outil (33, 33', 33'') est doté d'une surface d'appui (333, 333'') disposée en parallèle par rapport du tube- support (21), qui est située soit à distance du roulement pivotant (331, 341; 331'', 341''), soit dans le même roulement pivotant (331, 341; 331'', 341'').

17. Table d'ouvrage selon la revendication 12, **caractérisée par le fait que** le bras de serrage 30 est doté de segments 301, 302 inclinés l'un vers l'autre et que, au niveau du segment (301) incliné vers la pièce à usiner (6), le support porte- outil (33') peut être ajusté et arrêté.

18. Table d'ouvrage selon la revendication 1, **caractérisée par le fait que** des dispositions stabilisantes (7) peuvent être attribuées aux profilés (141, 141', 142, 143, 144, 145) qui peuvent être positionnées au choix, ces dispositions stabilisantes étant composées chacune d'un coulisseau (23) avec boulon fileté (231), d'une plaque de serrage (71) et d'un élément de serrage (72).

19. Table d'ouvrage selon la revendication 1, **caractérisée par le fait que**, dans le but d'assurer le positionnement exact de la pièce à usiner (6), des moyens auxiliaires (71, 8) peuvent être fixés entre le bout (22) du tube- support (21) et le dessus de table(14).
